Europäisches Patentamt

European Patent Office

Office européen des brevets

(11) Numéro de publication: **0 080 481**
**B1**

(12) **FASCICULE DE BREVET EUROPEEN**

(45) Date de publication du fascicule du brevet:
**24.10.84**

(21) Numéro de dépôt: **82901720.1**

(22) Date de dépôt: **03.06.82**

(86) Numéro de dépôt international:
**PCT/FR 82/00092**

(87) Numéro de publication internationale:
**WO 82/04366 (09.12.82** Gazette **82/29)**

(51) Int. Cl.³: **H 04 L 11/16**

(54) **PROCEDE ET DISPOSITIF POUR LA COMMUNICATION SERIE ASYNCHRONE DE TYPE MULTIPOINTS DE PLUSIEURS EMETTEURS-RECEPTEURS LOGIQUES.**

(30) Priorité: **05.06.81 FR 8111687**

(43) Date de publication de la demande:
**08.06.83 Bulletin 83/23**

(45) Mention de la délivrance du brevet:
**24.10.84 Bulletin 84/43**

(84) Etats contractants désignés:
**AT BE CH DE FR GB LI LU NL SE**

(56) Documents cités:
**EP - A - 0 023 105**
**FR - A - 2 306 478**
**GB - A - 2 013 452**

(73) Titulaire: **RYCKEBOER, Christian, 2, av Bouvard,
F-74000 Annecy (FR)**

(72) Inventeur: **RYCKEBOER, Christian, 2, av Bouvard,
F-74000 Annecy (FR)**

(74) Mandataire: **de Beaumont, Michel, Cabinet
Poncet 7, chemin de Tillier, F-74000 Annecy (FR)**

ACTORUM AG

## Description

La présente invention concerne les réseaux de communication logique formés d'équipements émetteurs-récepteurs, et plus particulièrement les réseaux permettant une communication de type multipoints, c'est-à-dire dans laquelle chaque émetteur-récepteur peut communiquer avec chacun des autres émetteurs-récepteurs du réseau.

Les besoins en communication d'ordinateurs ont conduit à développer des réseaux à communication rapide, travaillant par exemple à des vitesses de plusieurs mégabauds, et utilisant les techniques de transmission synchrone. Dans ces techniques, le codage des signaux permet généralement de régénérer l'horloge en réception, c'est-à-dire que les données transmises véhiculent le signal d'horloge de l'expéditeur, qui est utilisé par le destinataire pour échantillonner les signaux binaires reçus et désérialiser l'information. Dans ce type de liaison, tous les caractères sont émis à la suite les uns des autres sans temps mort, et le début de la transmission se caractérise en général par l'envoi d'un ou d'une succession de signaux binaires utilisés par le récepteur pour se synchroniser. Toute interruption de transmission entraîne la désynchronisation du destinataire.

En utilisant ces techniques de transmission synchrone, on a développé des réseaux permettant les communications de type multipoints, dans lesquelles la communication directe d'un expéditeur à un destinataire peut être réalisée. Pour cela, ces équipements utilisent le principe de la contention, c'est-à-dire que chaque émetteur-récepteur raccordé sur le réseau peut émettre si aucune autre transmission n'est en cours. Dans tous les systèmes connus à ce jour et utilisant ce principe de la contention, la transmission est de type synchrone, à grande vitesse, avec suppression de l'onde porteuse lors de l'absence de transmission, de sorte que tout émetteur-récepteur s'aperçoit très rapidement que le réseau est libre ou occupé.

Le brevet français No 2306478 décrit un tel dispositif: une transmission de message débute par un signal binaire de synchronisation, et une interruption à un moment quelconque est interprétée comme une fin de message, le réseau se trouvant immédiatement à l'état de repos. Ce dispositif ne peut fonctionner qu'avec un code véhiculant l'horloge de l'expéditeur, et la transmission est de type synchrone. Les messages contiennent les adresses de l'expéditeur et du destinataire. En cas de collision sur le réseau, les expéditeurs s'interrompent et reprennent l'émission après une attente de durée aléatoire, cette durée pouvant être pratiquement nulle. Aucun signal de collision n'est envoyé sur le réseau.

La demande de brevet européen No 0023105 décrit également un tel dispositif utilisant le principe de la contention, mais dans lequel le message est transmis dans un code particulier contenant des paquets de huit signaux binaires. La transmission est de type synchrone, le message véhiculant l'horloge, mais aucune adresse de destinataire n'est envoyée, de sorte que tous les récepteurs sont destinataires de tous les messages. Le code particulier oblige d'attendre au moins la durée d'un paquet avant de reprendre une émission interrompue.

La demande de brevet britannique No 2013452 décrit un dispositif dans lequel l'équipement expéditeur désigne son successeur, les équipements étant ainsi autorisés à émettre les uns après les autres selon un ordre modifiable. Il s'agit d'une technique très différente de la contention.

Les réseaux à transmission de type asynchrone permettent de réaliser des installations à plus faible débit mais beaucoup moins onéreuses; la détection de la disponibilité du réseau est plus délicate, de sorte que les liaisons multipoints n'ont jamais été réalisées en utilisant le principe de la contention. En effet, dans une transmission en mode asynchrone, les messages sont formés d'une suite de caractères séparés par des intervalles pendant lesquels l'onde porteuse est supprimée, de sorte qu'il est insuffisant de vérifier que cette onde porteuse est absente pour savoir si un message n'est pas en cours de transmission.

Ainsi, dans les réseaux utilisant le mode asynchrone, on a réalisé des liaisons multipoints dans lesquelles un équipement maître interroge tour à tour les équipements secondaires pour acquérir les informations que les équipements secondaires ont à transmettre, et sélectionne directement l'équipement secondaire auquel il veut transmettre des informations. Cela conduit à des réalisations de réseaux hiérarchiques relativement complexes et rigides.

La présente invention a notamment pour objet d'obvier aux inconvénients des réseaux connus en proposant un procédé et un dispositif permettant la transmission d'informations à moyenne vitesse en mode asynchrone entre plusieurs émetteurs-récepteurs logiques pour réaliser des réseaux présentant les caractéristiques suivantes: faible coût en comparaison des réseaux à transmission à mode synchrone; configuration multipoints; communication directe de l'expéditeur au destinataire.

Dans la suite de l'exposé, on considérera que le réseau est formé d'émetteurs-récepteurs composés chacun d'un circuit émetteur et d'un circuit récepteur. L'émetteur-récepteur voulant émettre un message sera appelé expéditeur, l'émetteur-récepteur à qui le message est destiné sera appelé destinataire.

Un autre objet de la présente invention est de proposer un procédé et un dispositif permettant de réaliser des réseaux dans lesquels on puisse modifier à volonté la position physique et le nombre des émetteurs-récepteurs raccordés au réseau.

Un autre objet de l'invention est de permettre la réalisation de réseaux dans lesquels on puisse modifier librement le contenu des messages transportés.

Un autre objet de l'invention est de réaliser de tels réseaux à partir de circuits logiques connus et habituellement utilisés pour les liaisons asynchrones point à point.

Pour ce faire, et selon une caractéristique de l'invention, le dispositif comprend des moyens pour réaliser plusieurs étapes : après réception d'un caractère ne lui étant pas destiné, l'équipement en attente d'émission reste à l'écoute pendant une durée supérieure à un temps d'attente minimal prédéterminé ; si, pendant cette durée d'attente, il n'a pas détecté un caractère, il émet un signal de début de message ; il émet ensuite les caractères du message, dont un au moins désigne l'adresse du destinataire et l'adresse de l'expéditeur ; il envoie enfin un signal de fin de message ; à chaque émission de caractère ou de signal, l'expéditeur compare les signaux correspondant aux caractères émis et les signaux détectés simultanément en écoute ; si les signaux sont identiques, il poursuit l'émission du message et, si les signaux sont différents, il interrompt l'émission du message, émet sur le réseau un caractère d'interruption, reste à l'écoute pendant un temps aléatoire supérieur au temps d'attente minimal, et recommence l'émission. Contrairement aux dispositifs connus, cette disposition permet l'utilisation du principe de contention pour la communication asynchrone de type multipoints de messages logiques, ces messages étant formés d'une suite de signaux binaires groupés en caractères codés de même longueur, séparés par des interruptions. En respectant les divers délais d'attente, on réduit les risques d'émissions simultanées de plusieurs messages par des expéditeurs différents.

Selon une autre caractéristique de l'invention, les signaux de début de message, de fin de message et d'interruption sont sensiblement identiques. En outre, on utilise pour ces trois types de signaux les caractères d'interruption couramment employés dans la technique des communications de type asynchrone, de sorte que leur reconnaissance par les circuits récepteurs peut être effectuée par les circuits classiques habituellement utilisés pour les transmissions asynchrones point à point. Ces caractères d'interruption comprennent un signal continu de durée supérieure à la durée des caractères formant le message, de telle sorte que leur forme soit différente de tous les codes utilisés dans les caractères composant le message. Le réseau ainsi réalisé est indépendant des codages utilisés pour coder les caractères formant les messages à émettre, de sorte qu'il peut supporter les applications les plus diverses.

Selon une autre caractéristique de l'invention, le temps d'attente minimal prédéterminé est au moins égal au temps de transmission d'un caractère, augmenté du temps de traitement interne maximal d'un émetteur-récepteur entre la fin de transmission d'un caractère et le début de l'émission du suivant, et augmenté du temps de propagation des signaux entre les points extrêmes du réseau. On s'assure ainsi qu'une non-réception de signal pendant le temps d'attente signifie qu'aucun message n'est en cours d'émission. En outre, si un circuit émetteur tombe en panne en cours de transmission, les autres expéditeurs peuvent occuper le réseau sans attendre une fin de message qui n'interviendrait qu'après la réparation du circuit émetteur défectueux.

Au cours de la phase de comparaison des signaux correspondant au caractère émis et des signaux détectés simultanément en écoute, la comparaison peut être effectuée en fin d'émission du caractère. Dans ce cas, deux expéditeurs peuvent débuter une émission simultanément, l'erreur n'étant détectée qu'en fin de premier ou de second caractère. On pourra réduire les risques d'un tel phénomène de collision en effectuant cette comparaison en fin d'émission de chaque signal binaire contenu dans le caractère.

D'autres caractéristiques et avantages de la présente invention ressortiront de la description suivante de modes de réalisation particuliers, faite en relation avec les figures jointes parmi lesquelles :

la fig. 1 représente schématiquement un réseau d'émetteurs-récepteurs selon la présente invention ;

la fig. 2 représente un exemple de forme d'onde caractérisant un caractère formant un message transmis par un réseau selon la présente invention ;

la fig. 3 représente une forme d'onde caractérisant un signal d'interruption ;

la fig. 4 représente les formes d'ondes d'un message à transmettre selon la présente invention ;

la fig. 5 représente les formes d'ondes d'un autre message selon la présente invention ;

la fig. 6 représente schématiquement les principaux éléments fonctionnels d'un émetteur-récepteur constituant le réseau selon la présente invention, et

la fig. 7 représente schématiquement les principaux éléments d'un émetteur-récepteur selon la présente invention.

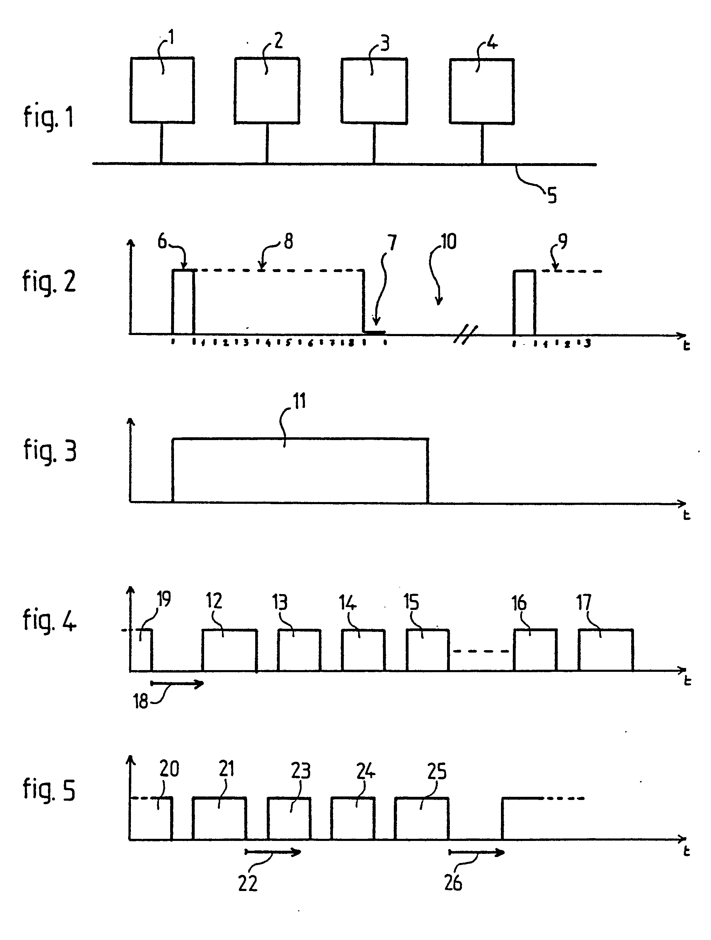

Le procédé de la présente invention permet de faire communiquer, comme le représente schématiquement la fig. 1, plusieurs émetteurs-récepteurs sur un même réseau selon un mode asynchrone. Les émetteurs 1 à 4 sont connectés en parallèle à une même ligne 5. Pour la clarté des dessins, la ligne et les connexions ne comportent qu'un seul conducteur, mais il est clair que deux conducteurs sont nécessaires. En outre, on pourra, sans sortir du cadre de la présente invention, réaliser des réseaux à transmission sans fil, les émetteurs 1 à 4 étant reliés en parallèle par l'intermédiaire d'ondes hertziennes, ou liaisons optiques telles qu'infrarouges ou fibres optiques.

Dans une transmission de type série asynchrone, l'information transmise ne véhicule pas l'horloge ; c'est pourquoi les caractères sont encadrés par un signal binaire de début de caractère et un signal binaire de fin de caractère. Le destinataire utilise le signal binaire de début de caractère pour recaler sa propre horloge et son propre dispositif d'échantillonnage sur une transition. L'échantillonnage est effectué à une fréquence supérieure, de sorte que le calage est suffisant pour toute la durée de transmission d'un caractère. Le calage ainsi réalisé est une fonction essentiellement différente de la synchronisation obtenue par les signaux binaires de début d'émission des transmissions synchrones.

On a représenté sur la fig. 2 une forme possible de caractère, comprenant un signal binaire de départ 6, suivi de huit signaux binaires dont le codage permet de désigner le caractère à transmettre, le dernier signal binaire étant suivi d'un signal binaire de fin de caractère 7. Le caractère 8 ainsi formé est séparé du caractère 9 suivant par un intervalle 10 de longueur essentiellement variable. La longueur de cet intervalle 10 dépend de la rapidité de traitement des circuits émetteurs entre deux caractères consécutifs. La longueur des caractères 8 ou 9 dépend du nombre de signaux binaires formant ces caractères; généralement, on pourra utiliser cinq à huit signaux binaires, plus éventuellement un signal de parité.

La fig. 3 représente, en relation avec la fig. 2, un caractère d'interruption 11 dont la particularité est d'être continu et d'une durée supérieure à celle d'un caractère défini en fig. 2, formant le message.

On a représenté sur la fig. 4 la constitution d'un message complet selon le procédé de la présente invention: ce message comprend un signal de début de message 12, formé de préférence par un caractère d'interruption tel que le caractère 11, un second caractère 13 désignant par exemple l'adresse du destinataire du message, un troisième caractère 14 désignant par exemple l'adresse de l'expéditeur, une série de caractères 15 à 16 contenant les caractères du message lui-même à transmettre, et un signal de fin de message 17, de préférence constitué par un caractère d'interruption tel que le caractère 11. Tous ces signaux et caractères formant le message sont constitués de la façon décrite en relation avec la fig. 2 et sont séparés par des intervalles tels que l'intervalle 10 pendant lesquels aucun signal n'est émis sur le réseau.

Avant de débuter la transmission d'un message tel que le représente la fig. 4, l'expéditeur doit tout d'abord respecter un délai d'attente, représenté par la flèche 18, après le dernier signal 19 détecté sur le réseau. Le délai d'attente 18 doit avoir une durée supérieure à un temps d'attente minimal prédéterminé. Ce temps d'attente minimal est au moins égal au temps de transmission d'un caractère sur le réseau, augmenté du temps de traitement interne habituel d'un circuit émetteur entre la fin de transmission d'un caractère et le début de l'émission du suivant, et augmenté du temps de propagation des signaux entre les points extrêmes du réseau.

En cours d'émission du message, et à chaque émission de caractère composant ce message, l'expéditeur compare les signaux correspondant au caractère en train d'être émis et les signaux détectés simultanément en écoute. Selon le résultat de cette comparaison, si les signaux sont identiques, l'expéditeur poursuit l'émission du message. Par contre, si les signaux sont différents, l'expéditeur interrompt l'émission du message, émet sur le réseau un caractère d'interruption, reste à l'écoute pendant un délai d'attente, et recommence l'émission à l'issue de ce temps d'écoute. Le délai d'attente doit être différent pour chaque émetteur-récepteur pour que, si plusieurs expéditeurs sont en attente d'émission alors qu'un

troisième est en œuvre, il ne se produise pas de collision systématique à la reprise des émissions. De préférence, ce délai d'attente, toujours supérieur au temps d'attente minimal prédéterminé, a une durée aléatoire pour ne pas introduire de hiérarchie entre les divers émetteurs-récepteurs.

Cette phase du procédé permet d'éviter, d'une part, les mauvaises transmissions des messages et, d'autre part, les collisions intervenant lorsque plusieurs émetteurs-récepteurs débutent une émission en même temps. Dans le cas d'une collision, les premiers caractères des deux messages émis par deux expéditeurs en collision sont des caractères d'interruption, de sorte que chacun des deux expéditeurs détecte l'identité des caractères reçus sur le réseau et des caractères émis. Chacun des deux expéditeurs poursuit donc l'émission en émettant les caractères désignant l'adresse du destinataire. Dans le cas où les adresses des destinataires sont différentes, les signaux présents sur le réseau sont constitués par la combinaison des deux signaux émis, et plusieurs cas sont alors possibles.

Le mélange des informations peut donner une erreur de lecture et/ou de parité de sorte que les deux expéditeurs arrêtent l'émission, émettent un signal d'interruption et attendent un délai aléatoire avant de reprendre cette émission.

Si le mélange des informations et le synchronisme apparent sont tels qu'il apparaisse sur le réseau un caractère représentant une adresse différente de l'adresse d'un au moins des expéditeurs, cet expéditeur détecte l'erreur et émet un signal d'interruption, de sorte que tous les expéditeurs arrêtent leur émission et attendent un délai aléatoire avant la reprise.

Dans le cas où le mélange des informations est tel que la collision n'est pas détectée à ce niveau, les expéditeurs vont transmettre leurs propres adresses qui sont obligatoirement différentes. Dans ce cas, l'un au moins des expéditeurs détectera une différence et produira l'interruption.

Au cours de la phase de comparaison des signaux correspondant au caractère émis et des signaux détectés simultanément en écoute par l'expéditeur, la comparaison est effectuée en fin d'émission du caractère. On peut ainsi utiliser pour cette comparaison les circuits logiques habituels pour comparer des caractères, ce qui conduit à des réalisations peu onéreuses. On pourra cependant effectuer ces comparaisons en fin d'émission de chaque signal binaire contenu dans le caractère.

Pendant la phase d'écoute initiale, l'expéditeur doit vérifier qu'aucun message n'est en cours de transmission. Cette vérification peut se faire de deux façons différentes: une première façon consiste à vérifier qu'aucun caractère complet n'a été reçu pendant cette phase d'écoute initiale; dans ce cas, les risques de collision sont relativement élevés, car il est fort probable que deux expéditeurs puissent débuter une émission pendant la durée d'émission d'un caractère. On pourra pour cela préférer une seconde méthode qui consiste à vérifier, d'une part, qu'aucun caractère n'a été reçu pendant la phase d'écoute initiale et que le réseau est à l'état de repos au moment où l'expéditeur envisage de commencer l'émission. Le temps pendant lequel peut se produire une collision est ainsi considérablement réduit.

Le procédé de la présente invention prévoit également une phase permettant de produire immédiatement un signal d'accusé de réception envoyé par le destinataire à l'expéditeur, de façon à occuper le réseau pendant un temps minimal. Ce message d'accusé de réception peut comprendre un caractère désignant l'adresse de l'expéditeur, un caractère désignant l'adresse du destinataire, éventuellement des caractères d'information, et un caractère final d'interruption. Le destinataire émet le premier caractère d'accusé de réception avant la fin du temps d'attente minimal prédéterminé qui suit le caractère d'interruption de l'expéditeur signifiant la fin du message. Ainsi, le destinataire est le seul à pouvoir émettre un message avant la fin de ce temps d'attente minimal prédéterminé, de sorte qu'il lui est inutile d'envoyer un caractère d'interruption en début de message d'accusé de réception, les autres expéditeurs ne pouvant émettre avant la fin de ce temps d'attente minimal prédéterminé. On a représenté en fig. 5 la succession des caractères apparaissant sur le réseau lors d'un tel message d'accusé de réception: le dernier caractère 20 du message de l'expéditeur est suivi du caractère 21 d'interruption, caractère 21 qui est suivi, pendant le délai d'attente minimal représenté par la flèche 22, par un premier caractère 23 émis par le destinataire et désignant l'adresse de l'expéditeur, un second caractère 24 désignant l'adresse du destinataire et le caractère d'interruption 25 marquant la fin du message d'accusé de réception. Toute autre émission ne pourra commencer qu'après la fin d'un nouveau délai d'attente 26.

Dans le but de limiter la consommation d'énergie des émetteurs-récepteurs, on pourra chercher à diminuer le temps pendant lequel les différents constituants (sous-ensembles) sont en fonctionnement. Pour cela on définit plusieurs états pour chaque émetteur-récepteur:

— pendant un état de repos, on ne requiert que le fonctionnement du dispositif de reconnaissance des signaux d'interruption marquant le début et la fin des messages, ce qui peut être réalisé de façon simple à l'aide d'un circuit de temporisation unique;

— pendant un état d'éveil, l'émetteur-récepteur a reconnu un signal de début de message et attend de reconnaître sa propre adresse pour savoir s'il est destinataire du message. Cet état peut ne durer que le temps de lecture du signal de début de message et du premier caractère contenant l'adresse du destinataire; si l'émetteur-récepteur ne reconnaît pas son adresse, il retourne à l'état de repos;

— si l'émetteur-récepteur reconnaît son adresse, il entre dans un état d'écoute dans lequel l'unité de traitement prend en compte le message reçu jusqu'à réception d'un signal de fin de message;

— on distingue en outre un état d'émission dans lequel l'émetteur-récepteur émet des messages sur le réseau ou un accusé de réception tout en restant à l'écoute des signaux présents sur ce réseau.

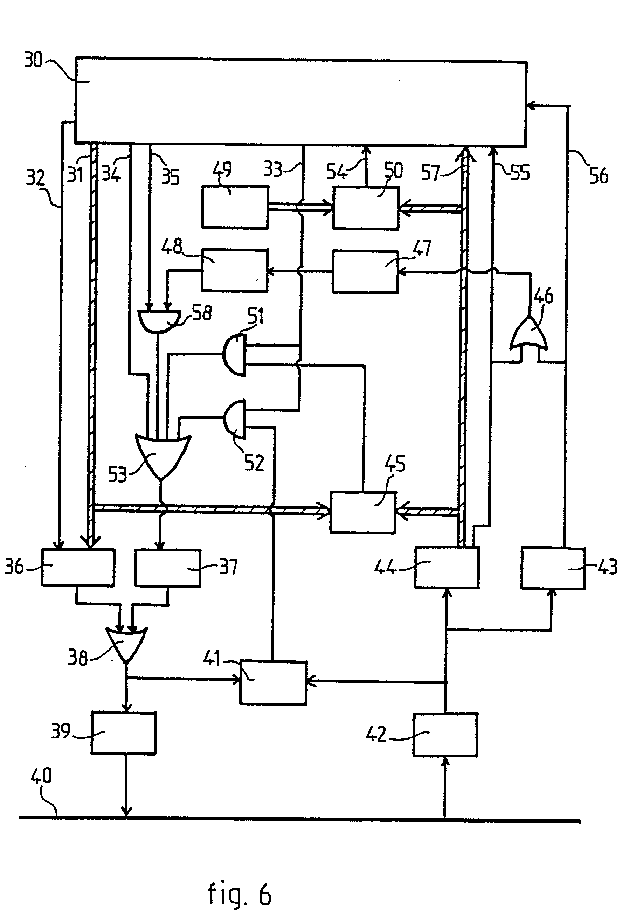

La fig. 6 représente les principaux éléments fonctionnels d'un émetteur-récepteur selon la présente invention. Cet émetteur-récepteur comprend une unité de génération et de traitement des messages 30 comportant plusieurs lignes de sortie 31 véhiculant le caractère à transmettre vers un circuit de sérialisation 36, une ligne de sortie 32 contrôlant la transmission des caractères entre l'unité de génération 30 et le circuit de sérialisation 36, une ligne de sortie 33 connectée à une borne d'entrée d'une porte ET 51 et d'une porte ET 52 pour valider l'émission d'un signal d'interruption 11 en cas de détection de collision lors de la phase de transmission, une ligne de sortie 34 pour commander la transmission du signal de fin de message 17, une ligne de sortie 35 pour commander la transmission du signal de début de message 12 par une porte ET 58. Un circuit 37 de génération des signaux de début de message, de fin de message et d'interruption en cas de collision est commandé par une porte OU 53 dont les bornes d'entrée sont connectées à la ligne 34 et aux bornes de sortie des portes ET 51, 52 et 58. Une porte OU 38 est interposée entre la sortie du circuit de sérialisation 36, la sortie du circuit 37 et l'entrée d'un amplificateur de ligne 39 dont la sortie est connectée au réseau 40.

L'unité de génération et de traitement de message 30 comporte également plusieurs lignes d'entrée 57 véhiculant le caractère reçu, une ligne d'entrée 55 contrôlant la transmission des caractères entre un circuit de désérialisation 44 et l'unité de traitement 30, une ligne d'entrée 56 raccordée à un circuit 43 de détection du signal d'interruption, une ligne d'entrée 54 raccordée à la sortie d'un circuit comparateur 50 destiné à comparer le caractère reçu sur les lignes 57 à l'adresse de l'équipement émetteur-récepteur définie par un circuit 49.

Le circuit désérialisateur 44 et le circuit de détection du signal d'interruption 43 sont connectés à la sortie d'un circuit d'adaptation de ligne 42, lui-même directement connecté au réseau 40.

La porte OU 46, dont les bornes d'entrées sont connectées aux lignes 55 et 56, détecte la réception d'un caractère ou d'un signal d'interruption et commande un circuit de temporisation 47 chargé d'interdire l'émission d'un nouveau message avant un temps minimal prédéterminé. La sortie de ce circuit de temporisation 47 commande un circuit de génération de temporisation aléatoire 48 qui autorisera la transmission de la commande 35 d'émission du signal de début de message au circuit 37 à travers la porte ET 58 et la porte OU 53.

Sur la figure, on a également représenté les circuits de détection de collision 41 ou 45. Le circuit 41 est utilisé si la comparaison entre signal émis et signal reçu s'effectue après transmission de chaque élément binaire composant les caractères et pendant les intervalles entre chaque caractère. Le circuit 45 est utilisé lorsque la comparaison s'effectue après la transmission de chaque caractère. Les portes ET 51 et 52, validées par la ligne de sortie 33 de l'unité de génération, permettent la transmission du signal de détection de collision vers le circuit générateur du signal d'interruption 37 à travers la porte OU 53.

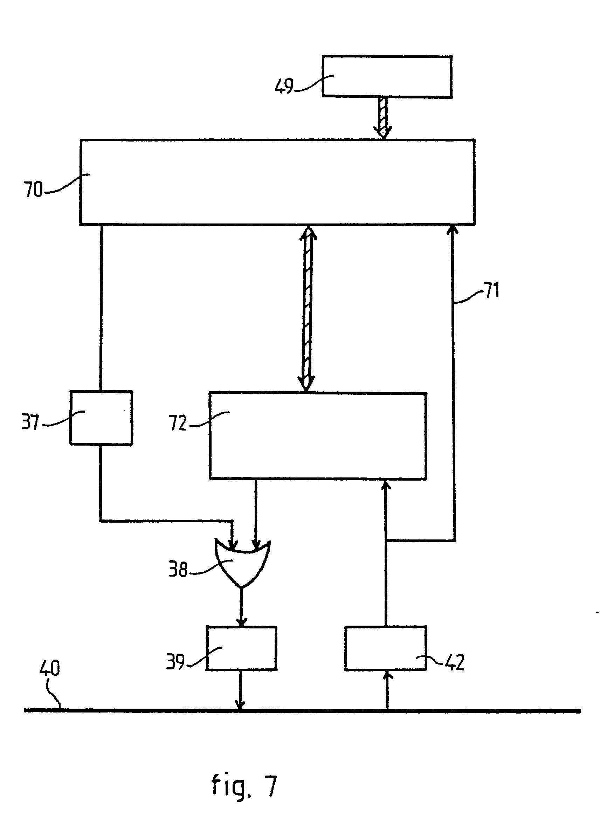

Dans le mode de réalisation qui précède, les circuits constituant l'émetteur-récepteur peuvent être réalisés par des moyens électroniques bien connus des spécialistes. Pour cette raison, il est inutile de décrire en détail la réalisation de ces circuits. En outre, la réalisation de ces fonctions peut être obtenue de façon particulièrement simple en utilisant la technique des microprocesseurs, comme le décrit le mode de réalisation suivant représenté schématiquement sur la fig. 7. Dans ce mode de réalisation, l'unité logique de commande 70 réalise les fonctions de reconnaissance d'adresse, de comparaison, de détection de collision, de temporisation, de mémorisation des informations et de blocage des émissions comme précédemment décrites. Pour cela, cette unité logique est connectée, d'une part, à l'adaptateur de ligne 42 par la ligne 71, permettant de détecter l'absence d'émission et éventuellement les collisions sur le réseau 40, d'autre part, à un circuit de sérialisation-désérialisation 72 connecté lui-même au réseau à travers l'amplificateur de ligne 39 et l'adaptateur de ligne 42, enfin au circuit 49 définissant l'adresse de l'émetteur-récepteur. Les circuits d'interface série-parallèle tels que le circuit 72 sont couramment utilisés dans les techniques de communication logique, et certains de ces circuits comportent une commande spéciale, non représentée sur la figure, permettant de générer directement en sortie un signal d'interruption 11. Dans le cas où ces circuits ne possèdent pas une telle commande, on pourra de façon simple, comme le représente la fig. 7, générer un tel signal d'interruption au moyen d'un circuit 37 commandé par l'unité logique 70 et produisant sur une porte OU 38 un signal logique continu envoyé sur le réseau 40 par l'amplificateur de ligne 39 pendant un temps prédéterminé supérieur à la durée d'un caractère. La porte 38 est alors interposée entre le circuit 72 et l'amplificateur 39.

Dans les deux modes de réalisation, l'unité logique de commande, 30 ou 70, permet d'empêcher l'inhibition d'émission pour envoyer un message d'accusé de réception sans attendre le temps d'attente minimal.

**Revendications**

1. Procédé pour la communication série, de type multipoints, de messages logiques entre plusieurs émetteurs-récepteurs connectés en parallèle sur un réseau, comprenant une première phase de réception des signaux éventuels présents sur le réseau et d'inhibition de l'émission tant qu'un signal est présent, une seconde phase d'émission au cours de laquelle l'expéditeur procède à la réception simultanée des signaux et des caractères présents sur le réseau, à la comparaison entre ces signaux et les signaux émis, et à l'inhibition de l'émission si les signaux présents et émis diffèrent, l'émission interrompue étant reprise ultérieurement après une nouvelle phase initiale de réception de durée aléatoire, les messages contenant au moins un caractère pour désigner l'adresse de l'expéditeur et un caractère pour désigner l'adresse du destinataire, caractérisé en ce que:

— la communication est de type asynchrone, l'émetteur et le récepteur fonctionnant chacun selon une horloge différente, les messages étant formés d'une suite de signaux binaires, sans horloge incorporée, groupés en caractères codés séparés par des intervalles (10), chaque caractère transmis étant précédé d'un signal binaire de départ (6) et suivi d'un signal binaire de fin de caractère (7);

— la phase initiale de réception et d'inhibition se poursuit pendant une durée (18) supérieure à un temps d'attente minimal prédéterminé suivant la réception du dernier signal;

— une émission débute par un signal de début de message (12);

— une émission se termine par un signal de fin de message (17);

— l'expéditeur envoie sur le réseau un signal de fin de message si les signaux présents et émis diffèrent.

2. Procédé selon la revendication 1, caractérisé en ce que, lors de la reprise d'une émission interrompue, l'émetteur-récepteur reste à l'écoute, avant reprise de l'émission, pendant une durée aléatoire supérieure au temps d'attente minimal prédéterminé.

3. Procédé selon l'une des revendications 1 ou 2, caractérisé en ce que les émetteurs-récepteurs ne souhaitant pas émettre sont normalement dans un état de repos, se mettent dans un état d'éveil dès qu'ils reçoivent un signal de début de message, et se remettent à l'état de repos s'ils ne reçoivent pas ensuite un caractère indiquant leur propre adresse.

4. Procédé selon l'une des revendications 1 à 3, caractérisé en ce que les caractères de début de message (12), de fin de message (17) et d'interruption (11) sont sensiblement identiques.

5. Procédé selon l'une des revendications 1 à 4, caractérisé en ce que les caractères d'interruption comprennent un signal continu de durée supérieure à la durée des caractères formant le message.

6. Procédé selon l'une des revendications 1 à 5, caractérisé en ce que le temps d'attente minimal prédéterminé (18) est au moins égal au temps de transmission d'un caractère, augmenté du temps de traitement interne d'un émetteur-récepteur entre la fin de transmission d'un caractère et le début de l'émission du suivant, et augmenté du temps de propagation des signaux entre les points extrêmes du réseau.

7. Procédé selon l'une des revendications 1 à 6, caractérisé en ce que, au cours de la phase de comparaison des signaux correspondant au caractère émis et des signaux détectés simultanément en écoute, la comparaison est effectuée en fin d'émission du caractère.

8. Procédé selon l'une des revendications 1 à 6, caractérisé en ce que, au cours de la phase de comparaison des signaux correspondant au caractère émis et des signaux détectés simultanément en écoute, la comparaison est effectuée en fin d'émission de chaque signal binaire contenu dans le caractère.

9. Procédé selon l'une des revendications 1 à 8, caractérisé en ce que l'émetteur-récepteur, à l'issue de la phase de réception initiale, n'émet le caractère de début de message que si aucun caractère n'a été détecté pendant cette phase et si le réseau est à l'état de repos.

10. Procédé selon l'une des revendications 1 à 9, caractérisé en ce que, après réception du signal de fin de message, l'émetteur-récepteur destinataire émet un message en retour avant la fin du temps d'attente minimal (22).

11. Procédé selon la revendication 10, caractérisé en ce que le message en retour contient au moins un caractère désignant l'adresse du récepteur et l'adresse de l'émetteur (23), et un caractère de fin de message (25).

12. Dispositif pour la communication série de type multipoints de messages logiques, chaque émetteur-récepteur comprenant des moyens pour mémoriser chaque caractère composant le message à émettre, des moyens pour émettre en série les signaux binaires formant les messages, des moyens de réception et de mémorisation des signaux reçus sur le réseau, des moyens (30) pour générer au moins un caractère désignant l'adresse de l'expéditeur et celle du destinataire (13), des moyens (41 ou 45) pour comparer les signaux correspondant au message en train d'être émis et les signaux correspondant au message reçu simultanément par les moyens de réception (42), des moyens (48) pour inhiber pendant une durée aléatoire l'émission si les signaux reçus et émis diffèrent, caractérisé en ce que chaque émetteur-récepteur comprend en outre:

— des moyens (30) pour organiser les messages en une suite de signaux binaires groupés en caractères codés séparés par des intervalles (10), sans horloge incorporée, chaque caractère transmis étant précédé d'un signal binaire de départ (6) et suivi d'un signal binaire de fin de caractère (7);

— des moyens de temporisation (47) pour produire l'inhibition de l'émission pendant une durée (18) supérieure à un temps d'attente prédéterminé suivant la réception d'un signal précédent;

— des moyens (35, 58, 53, 37) pour générer un caractère de début de message (12);

— des moyens (34, 53, 37) pour générer un caractère de fin de message (17);

— des moyens (41, 45) pour générer et envoyer sur le réseau un caractère de fin de message si les signaux reçus et émis diffèrent.

13. Dispositif selon la revendication 12, caractérisé en ce que les moyens (47, 48) pour inhiber l'émission pendant une durée aléatoire si les signaux reçus et émis diffèrent produisent l'inhibition pendant une durée supérieure au temps d'attente minimal prédéterminé.

14. Dispositif selon l'une des revendications 12 ou 13, caractérisé en ce qu'il comprend en outre des moyens pour empêcher l'inhibition d'émission et permettre l'envoi d'un message d'accusé de réception sans attendre le temps d'attente minimal.

15. Dispositif selon l'une des revendications 12 à 14, caractérisé en ce qu'il comprend des circuits de type émetteur-récepteur série asynchrone (72) produisant la sérialisation des caractères à émettre, la désérialisation des caractères reçus, et la production et la reconnaissance des signaux d'interruption.

**Patentansprüche**

1. Verfahren für die serielle Kommunikation vom Typ Mehrfachpunktnetz mit logischen Nachrichten zwischen mehreren Sende-Empfängern, die parallel mit einem Netz verbunden sind, bestehend aus einer ersten Phase des Empfangs von Signalen, die eventuell in dem Netz vorhanden sind, und des Blockierens des Sendens, solange ein Signal vorhanden ist, einer zweiten Phase des Sendens, in derem Verlauf das Absendegerät den gleichzeitigen Empfang von Signalen und Zeichen, die in dem Netz vorhanden sind, durchführt, sowie den Vergleich zwischen diesen Signalen und den ausgesendeten Signalen und das Blockieren der Sendung, wenn die vorhandenen und gesendeten Signale unterschiedlich sind, wobei die unterbrochene Sendung später nach einer neuen anfänglichen Phase des Empfangens von zufallsbedingter Dauer wieder aufgenommen wird, und wobei die Nachricht mindestens ein Zeichen enthält, um die Adresse des Absenders zu bezeichnen, und ein Zeichen, um die Adresse des Empfängers zu bezeichnen, dadurch gekennzeichnet, dass

— die Kommunikation asynchron erfolgt, wobei der Sender und der Empfänger jeweils mit unterschiedlichem Zeittakt arbeiten, wobei die Nachrichten durch eine Folge von binären Signalen ohne darin enthaltenem Zeittakt gebildet werden, und in codierten Zeichen gruppiert sind, die durch Intervalle (10) getrennt sind, und wobei jedem übertragenen Zeichen ein binäres Startsignal (6) vorangeht und ein binäres Signal des Zeichenendes (7) folgt;

— dass die anfängliche Phase des Empfangens und des Blockierens weitergeführt wird während einer Zeitdauer (18), die grösser ist als die vorbestimmte minimale Wartezeit nach dem Empfang des letzten Signals;

— eine Sendung mit einem Nachrichtenanfangssignal (12) beginnt;

— eine Sendung mit einem Signal des Nachrichtenendes (17) endet, und

— das Absendegerät in das Netz ein Nachrichtenendsignal sendet, wenn das vorhandene und das gesendete Signal unterschiedlich sind.

2. Verfahren gemäss Anspruch 1, dadurch gekennzeichnet, dass der Sende-Empfänger nach der Wiederaufnahme einer unterbrochenen Sendung vor der Wiederaufnahme der Sendung empfangsbereit bleibt, und zwar während einer zufallsbedingten Zeitdauer, welche grösser ist als die minimale vorbestimmte Wartezeit.

3. Verfahren gemäss einem der beiden Ansprüche 1 oder 2, dadurch gekennzeichnet, dass die Sende-Empfänger, die nicht senden wollen, normalerweise in einem Ruhezustand sind und in einen Wachzustand übergehen, wenn sie ein Signal des Nachrichtenbeginns empfangen, und wieder in den Ruhezustand übergehen, wenn sie nicht danach ein Zeichen empfangen, welches ihre eigene Adresse anzeigt.

4. Verfahren gemäss einem der Ansprüche 1 bis 3, dadurch gekennzeichnet, dass die Zeit des Nachrichtenbeginns (12), des Nachrichtenendes (17) und der Unterbrechung (11) im wesentlichen gleich sind.

5. Verfahren gemäss einem der Ansprüche 1 bis 4, dadurch gekennzeichnet, dass die Unterbrechungszeichen ein kontinuierliches Signal beinhalten, dessen Dauer länger ist als die Dauer der Zeichen, welche die Nachricht bilden.

6. Verfahren gemäss einem der Ansprüche 1 bis 5, dadurch gekennzeichnet, dass die minimale vorbestimmte Wartezeit (18) mindestens gleich der Zeit der Übertragung eines Zeichens ist, erhöht um die Zeit der internen Bearbeitung eines Sende-Empfängers zwischen dem Ende der Übertragung eines Zeichens und dem Beginn der Sendung des folgenden und erhöht um die Ausbreitungszeit der Signale zwischen den Extrempunkten des Netzes.

7. Verfahren gemäss einem der Ansprüche 1 bis 6, dadurch gekennzeichnet, dass, während der Phase des Vergleichens der den ausgesandten Zeichen entsprechende Signale und der gleichzeitig erkannten Signale, der Vergleich am Ende des Aussendens eines Zeichens bewirkt wird.

8. Verfahren gemäss einem der Ansprüche 1 bis 6, dadurch gekennzeichnet, dass, während der Phase des Vergleichens der den ausgesandten Zeichen entsprechenden Signale und der gleichzeitig erkannten Signale, der Vergleich nach dem Ende des Sendens jedes binären Signals bewirkt wird, das in dem Zeichen enthalten ist.

9. Verfahren gemäss einem der Ansprüche 1 bis 8, dadurch gekennzeichnet, dass der Sende-Empfänger am Ende der Phase des anfänglichen Empfangens das Signal des Nachrichtenbeginns nur aussendet, wenn kein anderes Zeichen erkannt wurde während dieser Phase und wenn das Netz im Ruhezustand ist.

10. Verfahren gemäss einem der Ansprüche 1 bis 9, dadurch gekennzeichnet, dass nach dem Empfangen des Signals des Nachrichtenendes das Bestimmungsgerät vor dem Ende der minimalen Wartezeit (22) eine Nachricht zurücksendet.

11. Verfahren gemäss Anspruch 10, dadurch gekennzeichnet, dass die zurückgesendete Nachricht mindestens ein Zeichen enthält, welches die Adresse des Empfängers und die Adresse des Senders (23) bezeichnet, und ein Zeichen des Nachrichtenendes (25).

12. Vorrichtung für die serielle Kommunikation in Mehrfachpunktnetzen mit logischen Nachrichten, wobei jeder Sende-Empfänger Einrichtungen aufweist, um jedes Zeichen zu speichern, aus denen sich die zu sendende Nachricht zusammensetzt, Einrichtungen, um die binären Signale, welche die Nachricht bilden, in Serie zu senden, Einrichtungen zum Empfang und zur Speicherung der Signale, die von dem Netz empfangen werden, Einrichtungen (30), um mindestens ein Zeichen zu erzeugen, welches die Adresse des Absenders und die des Empfängers (13) bezeichnet, Einrichtungen (41 oder 45), um die Signale zu vergleichen, die der zur Zeit gesendeten Nachricht entsprechen, und zwar mit den Signalen, die der gleichzeitig durch die Empfangseinrichtung 42 empfangenen Nachricht entsprechen, sowie Einrichtungen (48), um während einer zufallsbedingten Zeitdauer die Sendung zu blockieren, wenn die empfangenen und die gesendeten Signale unterschiedlich sind, dadurch gekennzeichnet, dass jeder Sende-Empfänger im übrigen enthält:

— Einrichtungen (30), um die Nachrichten in einer Folge von binären Signalen zu organisieren, die in codierten Zeichen gruppiert sind, welche durch Intervalle (10) getrennt sind, und zwar ohne Zeittakt, wobei jedem übertragenen Zeichen ein binäres Startsignal (6) vorangeht und ein binäres Endsignal (7) des Zeichens folgt;

— Verzögerungseinrichtungen (47), um die Blockierung der Sendung während einer Zeitdauer (18) zu bewirken, welche grösser ist als eine vorbestimmte Wartezeit, nach dem Empfang eines vorhergehenden Signals;

— Einrichtungen (35, 58, 53, 37), um ein Zeichen des Beginns der Nachricht (12) zu erzeugen;

— Einrichtungen (34, 53, 37), um ein Zeichen des Endes der Nachricht (17) zu erzeugen, und

— Einrichtungen (41, 45), um ein Zeichen des Nachrichtenendes zu erzeugen und in das Netz zu senden, wenn die empfangenen und ausgesendeten Signale unterschiedlich sind.

13. Vorrichtung gemäss Anspruch 12, dadurch gekennzeichnet, dass die Einrichtungen (47, 48) zum Blockieren der Sendung während einer zufallsbedingten Zeitdauer, wenn die empfangenen und die ausgesendeten Signale unterschiedlich sind, eine Blockierung während einer Zeitdauer bewirken, die grösser ist als die minimale vorbestimmte Wartezeit.

14. Vorrichtung gemäss einem der beiden Ansprüchen 12 oder 13, dadurch gekennzeichnet, dass sie im übrigen Einrichtungen aufweist, um das Blockieren der Sendung zu verhindern und das Absenden einer Empfangsbestätigung zu erlauben, ohne die minimale Wartezeit abzuwarten.

15. Vorrichtung gemäss einem der Ansprüche 12 bis 14, dadurch gekennzeichnet, dass sie serielle asynchrone Sende-Empfänger-Schaltungen (72) aufweist, welche die Serialisierung der zu sendenden Zeichen, die Deserialisierung der empfangenen Zeichen und die Erzeugung und das Erkennen des Unterbrechungssignals bewirken.

**Claims**

1. A multipoint serial communication method of logical messages between a plurality of transceivers connected in parallel to a network, which includes a first step of reception of the signals possibly present on the network and of inhibition of the transmission for as long as a signal is present, a second step of emission during which the sender undertakes simultaneous reception of the signals and the characters on the network, compares them to the signals and characters transmitted and inhibits all emissions if the signals do not match, the interrupted emission being restarted later on after a new initial step of reception of random duration is elapsed, the messages containing at least a character for sender address and addressee address identification, characterised in that:

— the communication mode is asynchronous, the emitter and the receiver circuits work with different clocks, messages are made of a sequence of binary signals, without encoded clock, grouped in coded characters and separated by time intervals (10), each emitted character being preceded by a binary start signal (6) and followed by an end of character signal (7);

— the initial reception and inhibition steps last for a time interval (18) longer than a minimum predetermined waiting time upon reception of the last signal;

— each transmission starts with a start of message signal (12);

— each transmission ends with an end of message signal, and

— the sender transmits on the network an end of message signal if the signals emitted and actually present on the channel are different from each other.

2. The method according to claim 1, characterised in that at the restart of an interrupted emission, the transceiver keeps listening to the network before restarting emission for a random duration longer than a predetermined minimum waiting time.

3. The method according to claim 1 or 2, characterised in that the transceivers are in a quiescent state during transmission pauses: they enter a stand-by state when they receive a start of message signal and they fall back in the quiescent state if they do not receive after that a character identifying their address.

4. The method according to any of claims 1 to 3, characterised in that the start of message (12), end of message (17) and interruption (11) characters are basically identical.

5. The method according to any of claims 1 to 4, characterised in that the interrupt characters comprise a continuous signal of duration longer than the duration of a normal message character.

6. The method according to any of claims 1 to 5, characterised in that the minimum predetermined waiting time (18) is at least equal to the transmission time of a character, increased of the internal processing time of a transceiver between the end of transmission of a character and the beginning of emission of the following one, increased of the signal propagation time between the extreme points of the network.

7. The method according to any of claims 1 to 6, characterised in that during the phase of comparison of the signal corresponding to the character emitted and the signals simultaneously monitored on the network, the comparison is made at the end of the character emission.

8. The method according to any of claims 1 to 6, characterised in that during the phase of comparison of the signals corresponding to the character emitted and the signals simultaneously monitored on the network, the comparison is made at the end of each binary signal of the character.

9. The method according to any of claims 1 to 8, characterised in that the transceiver, after the initial reception phase, transmits a start of message character only if no character has been detected during this phase and if the network is in a quiescent state.

10. The method according to any of claims 1 to 9, characterised in that after reception of the end of message signal, the addressed transceiver sends back an acknowledge-message before the minimum waiting time (22) is elapsed.

11. The method according to claim 10, characterised in that the acknowledge-message contains at least the character indicating the addressee's address, the sender's address (23), and the end of message (25).

12. A serial asynchronous communication device capable of sending/receiving logical messages on a multipoint network, each sending/receiving device comprising storage means to hold each character of the message to be transmitted, means to emit the serial binary signals which form a message, means for reception and storage of the signals received from the network, means (30) for generation of at least one character indicating the address of the sender and the address of the addressee (13), means (41 or 45) for comparison of the signals corresponding to the message beeing transmitted and the signals corresponding to the message received simultaneously *via* the reception means (42), means (48) to inhibit transmission if the signals received and monitored on the network are different, characterised in that each transceiver additionnally comprises:

— means to organise messages in a stream of binary signals grouped in coded characters separated by intervals (10), without encoded clock, each character preceded by a start (6) binary signal and followed by an end of character signal (7);

— timing means (47) to inhibit transmission for a duration (18) longer than a predetermined waiting time after the reception of the preceding signal;

— means (35, 58, 53, 37) to generate a start of message character (12);

— means (34, 53, 37) to generate an end of message character (17), and

— means (41, 45) to generate and emit an end of message character if the signals received and monitored on the network are different.

13. The device according to claim 12, characterised in that the means (47, 48) to inhibit the emission for a random duration of time when the signals received and monitored on the network are different generate an inhibit state during a duration longer than a minimum predetermined waiting time.

14. The device according to claim 12 or 13, characterised in that it additionally comprises media to override the transmission inhibition and to send an acknowledge-message without waiting for the minimum waiting delay.

15. The device according to any of claims 12 to 14, characterised in that it comprises serial asynchronous transceivers (72) which perform the serialisation of the characters to be transmitted, the deserialisation of the characters received, and the generation and identification of the interruption characters.

fig. 1

fig. 2

fig. 3

fig. 4

fig. 5

fig. 6

fig. 7